# EUROPEAN PATENT APPLICATION

(11) **EP 4 191 074 A1**
(43) Date of publication of application: **07.06.2023**
(21) Application number: 21461628.6
(22) Date of filing: 02.12.2021
(51) Int. Cl.: F15B 11/10, F15B 13/044

(54) **SERVO VALVE**

(71) Applicant: Collins Engine Nozzles, Inc., Des Moines, IA 50265 (US)
(72) Inventor: JASKIEWICZ, Zbigniew, 51-317 Wroclaw (PL); KIELCZYKOWSKI, Przemyslaw, 51-317 Wroclaw (PL)
(74) Representative: Dehns

(57) **Abstract**

A servo valve comprising: a fluid transfer valve assembly comprising a valve body having a supply port (10) and a control port (C); the valve body (20) comprising first and second nozzles (2A, 2B) and a drive member (12, 6) therebetween, arranged to regulate flow of fluid from the supply port (10) to the control port in response to a control signal; wherein the drive member comprises an elongate member (12) arranged to rotate in response to the control signal, and a cylindrical disk (6) mounted on, and arranged to rotate with, the elongate member, between the first and second nozzles, the cylindrical disk (6) having a cam profile such as to vary the spacing (A, B) between the disk and at least one of the nozzles as the cylindrical disk rotates relative to the first and second nozzles

## Description

### TECHNICAL FIELD

The present disclosure relates to servo valves used to transfer quantities of, or manage the flow of fluids, e.g., oil, fuel, or air.

### BACKGROUND

Servo valves find a wide range of applications for controlling air, fuel, oil or other fluid flows to effect driving or control of another part, e.g., an actuator.

A servo valve assembly may include a drive assembly such as a motor controlled by a control current which controls fluid flow to or from an actuator. Generally, a servo valve transforms an input control signal into movement of an actuator cylinder. The actuator controls another component which, in some examples, may be a valve. In other words, a servo valve acts as a controller, which commands the actuator, which changes the position of a valve's flow modulating feature.

Such mechanisms are used, for example, in various parts of aircraft where the management of fluid/air flow is required, such as in engine fuel control, oil flow, engine bleeding systems, anti-ice systems, air conditioning systems and cabin pressure systems. Servo valves also are widely used to control the flow and pressure of pneumatic, fuel and hydraulic fluids to an actuator, e.g. to control moving parts such as fuel or air systems. Some examples of applications are aircraft, automotive systems and in the space industry.

Conventionally, servo valve systems operate by obtaining pressurised fluid from a high pressure source which is transmitted through the valve from which the fluid is output as a control fluid. Various types of servo valves are known, examples of which are described in UK Patent Application No. GB 2104249A, U.S. Patent Application Publication No. 2015/0047729 and U.S. Patent No. 9,309,900.

Electrohydraulic servo valves can be dual stage valve, with a first stage with a motor, e.g. an electrical or electromagnetic force motor or torque motor, controlling flow of a hydraulic fluid to drive a valve member e.g. a spool valve of a second stage, which, in turn, can control flow of hydraulic fluid to an actuator for driving a load. The motor can operate to position a moveable member, such as a flapper, in response to an input drive signal or control current, to control flow through a first, pilot, stage which controls fluid flow to drive the second stage valve member e.g. a spool valve by controlling the flow of fluid acting on the spool. Movement of the spool causes alignment between the ports and fluid channels to be changed to define different flow paths for the control flow.

For low power applications, servo valves can be single stage valves, where the motor drives the flapper to control fluid flow through the main (single) stage of the valve, i.e. the valve body.

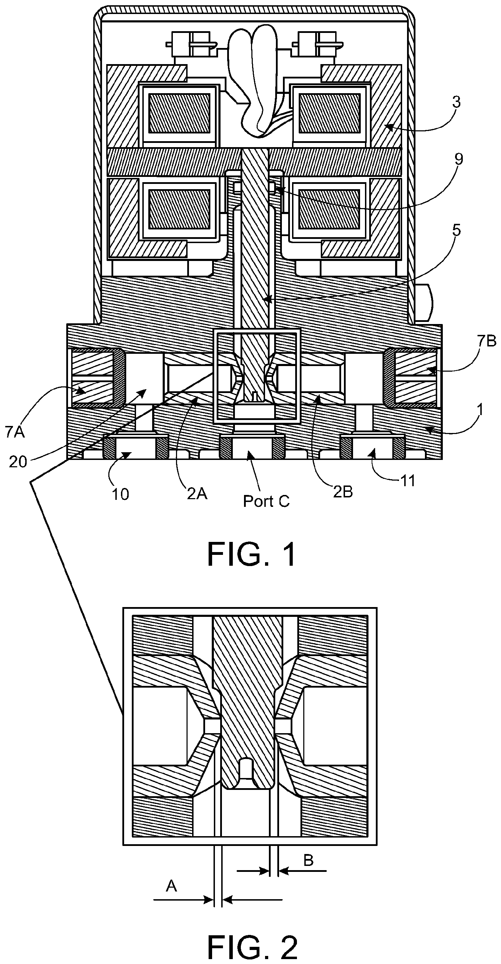

Conventional single stage servo valve systems will be described in more detail below with reference to figures 1 and 2.

Servo valves are often required to operate at various pressures and temperatures and so components parts need to be large enough to handle the large amounts of fluid needed to operate under such conditions. For example, in fast acting air valve actuators, relatively large amounts of fluid are required depending on the size of the actuator and the valve slew rate. For such high flow rates, however, large valve orifice areas are required. For 'flapper' type servo valves, whether single or dual stage, problems arise when dealing with large flows due to the fact that flow force acts in the direction of the flapper movement and the motor is forced to overcome the flow forces. For clevis-like metering valves such as those described in U.S. Patent Nos. 4,046,061 and 6,786,238, the flow forces, which are proportional to the flow, act simultaneously in opposite directions so that the clevis is balanced and centered. The clevis, however, needs to be big due to the requirement for bigger orifices to handle larger flows.

Such flapper assemblies allow a limited range of control on a single stage valve and the torque on the motor can become very high

There is a need for improved servo valve arrangements that can handle large fluid flows effectively and at high operation frequency, but with lower power consumption, and enabling variable control.

The present disclosure provides a servo valve assembly as defined in claim 1.

Also provided is a method of driving a valve body of a servo valve as defined in claim 10.

Preferred embodiments will now be described with reference to the drawings.

### BRIEF DESCRIPTION OF THE DRAWINGS

Fig. 1 is a schematic view of a conventional flapper type single stage servo valve;
Fig. 2 shows a detail of the flapper/nozzles of Fig. 1
Fig. 3 is a schematic view of a servo valve according to the present disclosure;
Fig. 4 is a section through A-A of Fig. 3
Fig. 5 shows an example of a cam element of an example according to the disclosure.
Fig.6 shows an alternative example of a cam element of an example according to the disclosure.
Fig. 7 shows another alternative example of a cam element of an example according to the disclosure.
Figs. 8 to 10 show how the cam lift angle can vary for different examples according to the disclosure.
Fig. 11 shows an example of yet a further cam element profile in situ.
Fig. 12 shows how the cam lift angle varies with rotation of the cam element of Fig. 11.
Fig. 13 is a schematic view of an assembly according to the disclosure, for controlling an actuator.

### DETAILED DESCRIPTION

A servo valve as described below can, for example, be used in an actuator control system. The servo valve is controlled by a drive assembly to control a flow of fluid that is output to control the movement of an actuator. The actuator can control e.g. fuel or air systems but can also control e.g. flight control systems of an aircraft, as it is able to accurately maintain stop positions of an actuator and, similar to a dual stage servo valve, does not suffer loss of pressure or liquid capacity when the actuator changes position.

Conventional single-stage flapper servo valves will first be described with reference to Figs. 1 and 2.

A typical single-stage flapper servo valve is shown in Fig. 1. The assembly comprises a drive assembly, and a valve body assembly. The valve body assembly includes a housing 1 defining a valve body 20 closed at each end by a plug 7A, 7B. Pressurised fluid is provided to the valve body 20 from a supply port 10 and exits the valve body 20 via a return port 11. A flapper 5 extends into the valve body 20. The position of the flapper 5 in the valve body 20 is controlled by the drive assembly to regulate the flow of pressurised fluid from the valve body 20 out through a control port C to control the actuator or other moveable part. Nozzles 2A, 2B are provided in the valve body 20 either side of the flapper 5. The first nozzle 2A is between the flapper and the supply port 10 and the second nozzle 2B is between the flapper and the return port 11. In a balanced or neutral position, the flapper is equidistant from both nozzles and so the gap A, between the first nozzle 2A and the flapper 5 is equal to the gap B between the flapper and the second nozzle 2B. Fluid pressure is, therefore, equal either side of the flapper. If it is desired to provide fluid from the control port C to e.g. move an actuator piston 13 in a given direction, a command is provided to the drive, which in Fig. 1 is a torque motor 3, which pivots the flapper towards nozzle 2B - i.e. from left to right in Fig. 1 and Fig. 2 which increases gap A to increase the fluid flow passage from the first nozzle 2A such that fluid from the supply port 10 flows out through the control port C. The more the flapper turns from the neutral position, e.g. to the right, the greater is gap A compared to gap B and so the fluid flow to port C (and beyond) is greater, while the flow to return port 11 is less. This difference causes the piston 13 to move to the right. If the position of the flapper is reversed and gap A is smaller than gap B, then there is less flow through nozzle 2A to port C and more flow from port C to port 11, which causes the piston to move in the opposite direction (to the left in the drawing).

In more detail, in the conventional flapper type assemblies, to open the servo valve, control current is provided to coils of the motor (e.g. a torque motor) creating electromagnetic torque opposing the sum of mechanical and magnetic torque already 'present' in the torque motor. The bigger the electromagnetic force from the coils, the more the flapper pivots. The more it pivots, the greater the flow through the control port C. A torque motor usually consists of coil windings, a ferromagnetic armature, permanent magnets and a mechanical spring (e.g. two torsional bridge shafts). This arrangement provides movement of the flapper proportional to the input control current.

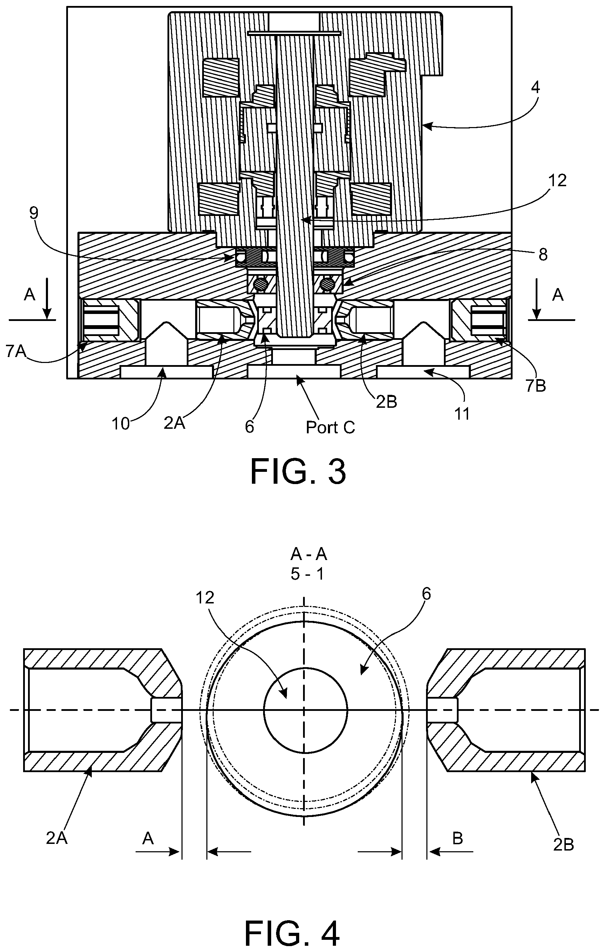

The apparatus of the present disclosure operates in a manner similar to the known flapper assembly, in that the flapper-type drive element varies the distance A between the nozzle 2A and the drive element in response to a drive command, but using an alternative drive member construction. This will be described with reference to Figs. 3 to 14.

Instead of the drive element being a flapper element configured and operating as described above with reference to Figs. 1 and 2, that pivots to the left and right to vary distances A and B, the arrangement of the present disclosure uses a modified drive element in the form of a cylindrical drive element having a cam profile and the drive element being rotated by the motor to vary the relative flow through the nozzles due to the cam profile varying the distance A as the drive element rotates.

The cylindrical drive element according to this disclosure comprises a shaft 12 extending from the drive assembly and into the valve body 20 between the nozzles 2A and 2B and a cylindrical disk 6 mounted around the end of the shaft between the nozzles 2A and 2B. The drive assembly comprises a stepper motor 4 that rotates the shaft and, therefore, rotates the disk 6 with respect to the nozzles 2A, 2B. The outer circumferential profile of the disk is formed to have a cam profile and so is not circular.

To change the rotary position of the drive element 12, 6, a rotary motor such as a micro stepper motor 4, with or without encoder, or a micro brushless DC (BLDC) motor with encoder may be used.

Different cam profiles can be used, as will be described further below, but in all examples, the cam profile will be such that at some angles of rotation of the disk, the distance between the disk outer surface and the first nozzle 2A will be greater than at other angles of rotation.

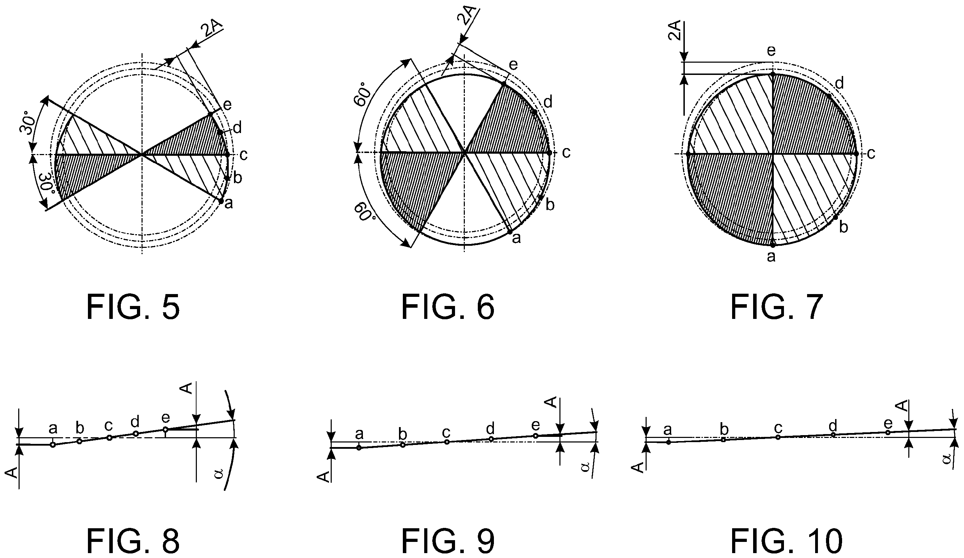

Figure 5 shows one example of a possible cam profile, wherein two side locations of the disk circumference, in the region of the nozzles 2A, 2B, and extending 30 degrees either side of the nozzle, have a varying profile and the circumference between these locations is constant. Figure 8 shows the angle α as the disk 6 is rotated across the varying profile location.

Figure 6 shows an alternative profile, where a varying profile extends 60 degrees either side of the nozzles and Figure 9 shows the corresponding changes in the angle α. In the design shown in Fig. 7, the varying profile extends all around the circumference of the disk 6 and the angle α is shown in Fig. 10.

Figures 8, 9 and 10 show the angle α for the different cam lifts of the disk 6. The greatest angle α, in these examples, is in the example of Fig. 8 and the smallest is in Fig. 10. The angle α affects the accuracy of the positioning of the actuator piston. For a smaller angle, the positioning accuracy is greater, but a larger angle, such as shown in Fig. 8 provides a faster rate of position change. A compromise between the two needs to be made in designing the cam profile.

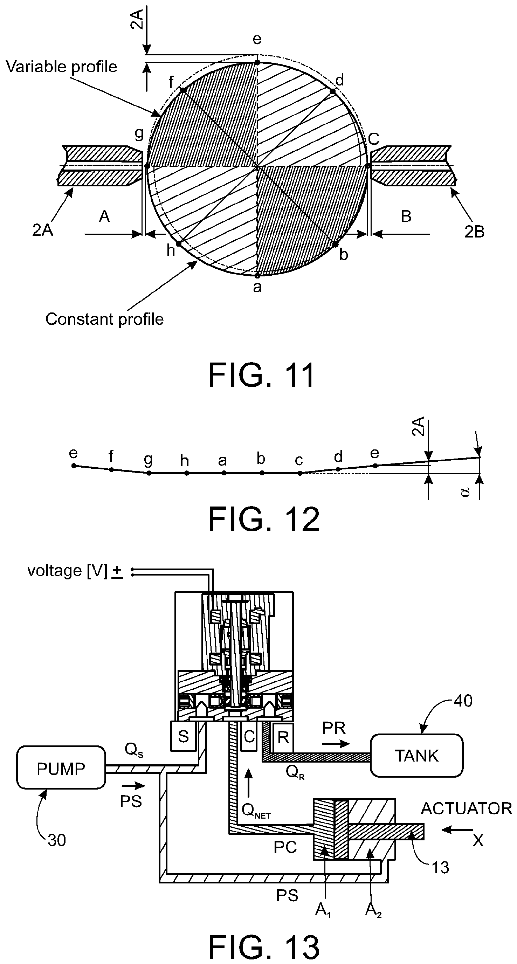

In an alternative example, as shown in Fig. 11, the varying profile may be provided only on one side of the disk, indicated by letters c, d, e, f, g with the other side (letters g, h, a, b, c) having a constant profile. Figure 12 shows how angle α changes with such a profile. With such a profile, only one nozzle 2A is controlled, by the varying profile side rotating relative to the nozzle, whilst the distance B is unchanged due to the constant profile section rotating past that nozzle 2B. With this example, the flow through control port C can be freely and independently controlled. This is represented in Fig. 14. Here, the position of the actuator piston 13 is controlled purely by the supply fluid pressure PS from the pump 30 acting on one side of the piston and the control fluid pressure PC, from the control port C, as regulated by the one-sided cam profile of the disk 6, acting on the other side of the piston 13. If PS exceeds PC and the piston moves in the direction of arrow X, fluid is directed to the tank 40 via the return port 11 at return pressure PR. It is possible to limit the influence of high pressure from the supply port 10 on the return flow PR at any angular position of the disk 6. Thus, the control (speed) of the actuator piston 13 can be adjusted according to requirements separately for movement in both directions (X and the opposite direction). With this cam profile, the valve is shown in the closed or neutral position in Fig. 11, where A and B are equal and at a minimum. This enables the zero position, or stop position of the actuator piston 13 to be easily adjusted and maintained during operation and the system is more resistant to misalignment than conventional systems. The piston can stop at various positions - not only in the neutral or extreme left and right positions. If, for example, gap B is increased, the piston 13 moves to the left. The piston movement can be stopped at any position after setting the disk to a neutral position.

Some advantages of the assembly of this disclosure compared to the conventional flapper design are set out below.

A main advantage of the servo valve of this disclosure is that it can replace a second stage servo valve in some applications, because it is able to very accurately keep a stop position of an actuator, and there is very low or no loss of pressure and fluid capacity during movement of the piston, similar to a dual stage servo valve. In some large flow applications, though, the single stage servo valve cannot replace a second stage servo valve.

With this design, changing the position of the cam profile does not affect the motor torque. The motor torque remains substantially constant and relatively small.

Cam profiles can be selected and manufactured according to requirements and there is no limit on the variations available. Control accuracy can be increased by increasing the angle or diameter of the disk 6. With reference to Figs. 5 to 10, it can be seen that the smaller the cam lift angle α, the more accurate the control. Also, the speed of operation of the valve can be varied by varying the extent of the profile section and the two nozzles 2A and 2B can be controlled independently of each other.

Further, in conventional single stage flapper valves, use is restricted to relatively low pressure applications. With the design of this disclosure, the valve can be used in higher pressure applications because the pressure does not affect the operation of the drive motor. It is only necessary to ensure that there is adequate sealing 9 around the shaft 12.

Although this disclosure has been described in terms of preferred examples, it should be understood that these examples are illustrative only and modifications and alterations are possible within the scope of the claims.

## Claims

1. A servo valve comprising:
a fluid transfer valve assembly comprising a valve body having a supply port (10) and a control port (C);
the valve body (20) comprising first and second nozzles (2A, 2B) and a drive member (12, 6) therebetween, arranged to regulate flow of fluid from the supply port (10) to the control port in response to a control signal;
wherein the drive member comprises an elongate member (12) arranged to rotate in response to the control signal, and a cylindrical disk (6) mounted on, and arranged to rotate with, the elongate member, between the first and second nozzles, the cylindrical disk (6) having a cam profile such as to vary the spacing (A, B) between the disk and at least one of the nozzles as the cylindrical disk rotates relative to the first and second nozzles.

2. A servo valve as claimed in claim 1, the valve body further having a return port (11), such that the spacing (A) between the cylindrical disk (6) and the first nozzle (2A) controls the flow of fluid from the supply port (10) to the control port (C) and the spacing (B) between the cylindrical disk (6) and the second nozzle (2B) controls the flow of fluid between the control port (C) and the return port (11).

3. A servo valve as claimed in claim 1 or 2, further comprising a motor (4) arranged to cause rotation of the drive member (12, 6) in response to the control signal.

4. A servo valve as claimed in claim 3, wherein the motor is a stepper motor (4).

5. A servo valve as claimed in any preceding claim, wherein the cylindrical disk (6) has a cam profile defining a lift angle α, wherein the lift angle is between about 10 degrees and about 90 degrees.

6. A servo valve as claimed in any preceding claim, wherein the cylindrical disk (6) has a cam profile extending over a lift angle of 60 degrees of the disk periphery adjacent each nozzle.

7. A servo valve as claimed in any of claims 1 to 5, wherein the cylindrical disk (6) has a cam profile extending over a lift angle of 90 degrees of the disk periphery adjacent each nozzle.

8. A servo valve as claimed in any of claims 1 to 5, wherein the cylindrical disk (6) has a cam profile extending over part of the disk periphery adjacent the first nozzle (2A) and a constant profile extending over the disk periphery adjacent the second nozzle (2B).

9. An actuator assembly comprising an actuator having a piston (13) axially movably located in an actuator housing and a servo valve as claimed in any preceding claim, wherein the control port is in fluid connection with the actuator such that fluid flow through the control port (C) determines the direction and extent of movement of the piston (13) relative to the housing.

10. A method of controlling flow of fluid through a single stage servo valve, comprising causing a cam profile of a cylindrical disk located between two nozzles in a valve body, to rotate in response to a control signal, the cam profile rotating such as to vary the spacing between the disk and at least one of the nozzles as the cam profile rotates.

11. The method of claim 10, further comprising providing the control signal to a motor, the motor causing rotation of the drive element.

12. A method of operating an actuator comprising a piston (13) axially movably located within an actuator housing, the method comprising controlling flow of fluid through a single stage servo valve, comprising causing a cam profile of a cylindrical disk located between two nozzles in a valve body, to rotate in response to a control signal, the cam profile rotating such as to vary the spacing between the disk and at least one of the nozzles as the cam profile rotates, the fluid flow through the servo valve being directed to the actuator to control the direction and degree of movement of the piston (13) relative to the housing.

13. The method of claim 12, wherein movement of the piston (13) can be stopped at any axial position in the housing based on the degree of rotation of the disk.
